# FASCICULE DE BREVET EUROPEEN

(11) **EP 4 448 384 B1**
(45) Date de publication et mention de la délivrance du brevet: **15.07.2026**
(21) Numéro de dépôt: 22843359.5
(22) Date de dépôt: 13.12.2022
(51) Int. Cl.: B64C 27/12

(54) **PROCÉDÉ DE RÉGULATION DE LA VITESSE DE ROTATION D'UN PROPULSEUR D'UN GROUPE PROPULSIF HYBRIDE POUR AÉRONEF, EN SITUATION DE PANNE DU SYSTÈME DE RÉGULATION PRINCIPAL DU MOTEUR THERMIQUE DU GROUPE PROPULSIF HYBRIDE**
VERFAHREN ZUR DREHZAHLREGELUNG EINES ANTRIEBS FÜR EIN HYBRIDTRIEBWERK BEI AUSFALL DES HAUPTREGELUNGSSYSTEMS DES TERMISCHEN TRIEBWERKS DES HYBRIDANTRIEBS
METHOD FOR REGULATING THE SPEED OF ROTATION OF A PROPULSION DEVICE OF A HYBRID PROPULSION UNIT FOR AN AIRCRAFT, IN THE EVENT OF A FAILURE OF THE MAIN REGULATION SYSTEM OF THE HEAT ENGINE OF THE HYBRID PROPULSION UNIT

(30) Priorité: 17.12.2021 FR 2113833
(43) Date de publication de la demande: 23.10.2024
(73) Titulaire: Safran Helicopter Engines, 64510 Bordes (FR)
(72) Inventeur: LEMAY, David Bernard Martin, 77550 MOISSY-CRAMAYEL (FR); MARIN, Jean-Philippe Jacques, 77550 MOISSY-CRAMAYEL (FR); FREALLE, Jean-Luc Charles Gilbert, 77550 MOISSY-CRAMAYEL (FR)
(74) Mandataire: Santarelli
(86) Numéro de dépôt international: PCT/FR2022/052330
(87) Numéro de publication internationale: WO 2023/111445

(56) Documents cités:
- GB-A- 2 078 861
- US-A1- 2002 078 692
- US-A1- 2002 171 005
- US-A1- 2016 375 994
- US-A1- 2020 277 064

## Description

### DOMAINE TECHNIQUE

La présente invention se rapporte aux groupes propulsifs hybrides parallèles pour aéronefs. L'invention s'applique plus particulièrement à des groupes de propulsion et de sustentation d'aéronefs à voilure fixe ou tournante (hélicoptère), ou d'aéronefs à décollage et atterrissage verticaux (VTOL de l'anglais « Vertical Take-Off and Landing aircraft »). L'invention peut également s'appliquer à des architectures type multipropulseur.

### ÉTAT DE LA TECHNIQUE ANTÉRIEURE

Dans un groupe propulsif hybride parallèle, les moyens de génération et de fourniture de puissance propulsive sont redondés pour permettre l'atterrissage de l'aéronef dans des conditions de sécurité satisfaisantes en cas de panne partielle d'une chaine de puissance.

Un exemple d'application caractéristique est un groupe propulsif hybride parallèle d'hélicoptère, composé d'un turbomoteur et d'une motorisation électrique entraînant tous les deux les rotors principaux et d'anti-couple.

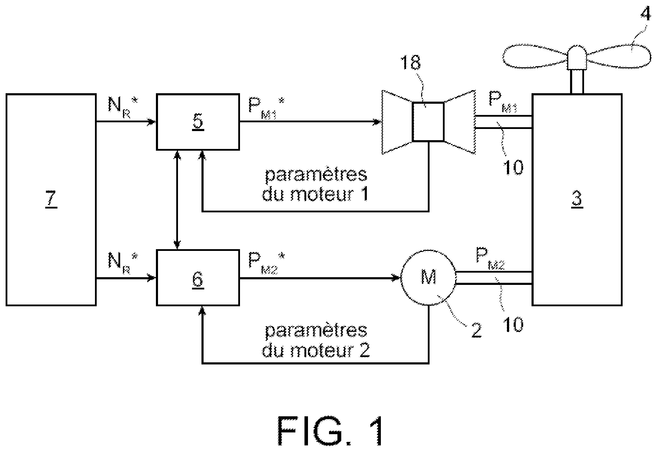

Un exemple d'un tel groupe propulsif hybride parallèle est illustré dans la figure 1. Il comporte :
- une boite de transmission principale 3 (ci-après BTP) ;
- un propulseur 4, relié à la BTP ; il peut par exemple s'agir d'un rotor, d'une hélice, d'une soufflante, etc. ;
- un moteur principal thermique (nommé moteur 18), relié à la BTP et disposé pour délivrer de la puissance mécanique P_{M1} à la BTP ;
- un moteur secondaire électrique (nommé moteur 2), relié à la BTP et disposé pour délivrer de la puissance mécanique P_{M2} à la BTP ;
- un système de régulation 5 du moteur 18 capable de réguler la vitesse de rotation du moteur 1 par le biais de la commande P_{M1*} ;
- un système de régulation 6 du moteur 2 capable de réguler la vitesse de rotation du moteur 2 par le biais de la commande P_{M2*} ;
- un système de contrôle de l'aéronef 7 pouvant communiquer avec les systèmes de régulation des deux moteurs pour leur envoyer des ordres de haut niveau, comme la consigne de vitesse de rotation N_{R}* du propulseur à entraîner.

En fait, chaque système de régulation d'un moteur est capable de réguler la puissance mécanique délivrée par le moteur auquel il est relié, par le biais de la commande P_{M1}*, afin d'asservir la vitesse de rotation du moteur sur une consigne de vitesse N_{R}*.

Chacun des moteurs est relié par un arbre 10 à la boite de transmission principale 3, qui va transmettre la puissance du ou des moteurs au propulseur 4.

Les paramètres de chaque moteur (Paramètres du moteur 18 et Paramètres du moteur 2) sont envoyés à leurs systèmes de régulation respectifs.

L'architecture hybride parallèle telle que schématisée sur la figure 1 permet en premier lieu de palier à la panne du moteur principal thermique (moteur 18) et de réaliser un dégagement et/ou un atterrissage d'urgence grâce à la puissance délivrée par le moteur auxiliaire électrique (moteur 2). Dans ce cas de panne, le moteur principal (moteur 18) a une panne qui ne lui permet plus de fournir de puissance à la boite de transmission principale. Un cas typique de ce type de panne est l'arrêt du moteur principal en vol, sans possibilité de le redémarrer. Le système de régulation 5 du moteur 18 en panne devient donc inopérant. La puissance délivrée à la BTP provient alors uniquement de la puissance délivrée par le moteur auxiliaire (moteur 2), cette puissance étant contrôlée par le système de régulation 6 du moteur 2, sous l'autorité du système de contrôle de l'aéronef 7.

Mais d'autres types de panne peuvent se produire. Dans le cadre de la présente invention, on s'intéresse aux pannes qui affectent le système de régulation 5 du moteur principal et qui ne lui permettent plus de contrôler la puissance délivrée par le moteur 18. Dans ce cas, le moteur 18 est en général toujours allumé et capable de délivrer de la puissance, mais celle-ci ne peut plus être régulée par le système de régulation 5 du moteur 18. On parle en général de panne totale de régulation.

Une stratégie connue dans le monde des turbines d'hélicoptère est alors de figer le débit de carburant injecté au moteur 18, afin de maintenir le moteur 18 en fonctionnement et de geler la puissance qu'il délivre. La panne est alors indiquée au système de contrôle de l'aéronef 7 et au pilote, afin qu'il réalise une manœuvre adéquate et un atterrissage d'urgence.

Avec un groupe propulsif hybride parallèle de l'art antérieur tel que présenté précédemment, le moteur auxiliaire 2 peut moduler la puissance complémentaire qu'il délivre au propulseur 4 et ainsi maintenir la vitesse de rotation du propulseur dans une plage acceptable.

Cependant, si la panne de régulation du moteur 18 arrive au moment où le moteur 18 délivre une puissance élevée, le moteur 2 ne pourra pas réduire la puissance délivrée au propulseur et le pilote devra volontairement arrêter le moteur principal pour pouvoir stabiliser l'hélicoptère et atterrir. Le pilote est donc dans l'obligation de réaliser un dégagement, puis un atterrissage d'urgence, en se privant de la puissance que peut encore fournir le moteur principal 18.

Il serait donc avantageux, en cas de panne du système de régulation 5 du moteur principal 18, de pouvoir moduler la puissance délivrée par le moteur principal afin de l'adapter aux besoins de l'aéronef, tout en régulant la vitesse de rotation du propulseur grâce au moteur auxiliaire 2. En d'autres termes, il serait avantageux de pouvoir continuer à réguler la vitesse de rotation du propulseur grâce aux deux moteurs, même en cas de panne du système de régulation du moteur 18.

Le document US2016/357994A1 prévoit un procédé d'entraînement en rotation d'un rotor d'un aéronef doté de deux moteurs à combustion et un moteur électrique adapté pour entraîner en rotation le rotor. Le rotor est entraîné en utilisant ensemble les moteurs à combustion. Une autorisation est générée uniquement durant une phase prédéterminée du vol, l'autorisation permettant l'utilisation du moteur électrique afin d'entraîner le rotor en rotation. Tant que l'autorisation est valide et si l'un des moteurs à combustion est défaillant, alors un ordre de fonctionnement est généré pour exiger que le moteur électrique fonctionne. Tant que l'ordre de fonctionnement est valide, le rotor est entraîné par chaque moteur à combustion qui n'est pas défaillant, conjointement avec le moteur électrique.

### EXPOSÉ DE L'INVENTION

Pour ce faire, l'invention a pour objet un procédé de régulation de la vitesse de rotation Nₚ d'un propulseur d'un groupe propulsif hybride pour aéronef, en situation de panne du système de régulation principal du moteur thermique du groupe propulsif hybride, le groupe propulsif hybride comprenant :
- le propulseur et une boite de transmission principale, apte à entrainer le propulseur ;
- le moteur thermique et au moins un moteur électrique, montés en parallèle sur la boite de transmission principale, le moteur thermique étant muni d'un circuit carburant apte à amener du carburant dans une chambre de combustion du moteur thermique ;
- un système de régulation principal du moteur thermique, apte à réguler la vitesse de rotation du moteur thermique ;
- un système de régulation de secours du moteur thermique, apte à réguler la vitesse de rotation du moteur thermique lorsque le système de régulation principal est en panne ;
- un système de régulation du moteur électrique, apte à réguler la vitesse de rotation du moteur électrique ;
- un système de contrôle de l'aéronef, apte à envoyer une consigne de vitesse ou de puissance à chacun des moyens de régulation du moteur thermique et du moteur électrique ;
le procédé comprenant, lorsque le système de régulation principal du moteur thermique est en panne et que ledit système est figé sur une commande de débit de carburant QCarbP*, les étapes consistant à :
- envoyer une consigne de vitesse N_{M2réf} au système de régulation du moteur électrique, pour que le système de régulation du moteur électrique envoie une commande de puissance P_{M2}* au moteur électrique, moyennant quoi une puissance instantanée P_{M2m} du moteur électrique est obtenue ;
- simultanément, envoyer une consigne de vitesse de rotation ou de puissance au système de régulation de secours du moteur thermique, pour que le système de régulation de secours envoie une commande de débit de carburant QCarbAux* au circuit carburant du moteur thermique, la commande QCarbAux* étant choisie de manière à faire varier le débit carburant QCarb injecté dans la chambre de combustion du moteur thermique selon que l'on souhaite augmenter ou diminuer la puissance P_{M1} du moteur thermique.

La commande de débit de carburant QCarbP* correspond à la dernière commande de puissance P_{M1}* obtenue avant la panne totale du système de régulation principal.

Selon un mode de réalisation de l'invention, une consigne de puissance de référence du moteur électrique P_{M2réf}* étant envoyée au système de régulation de secours du moteur thermique, la commande de débit de carburant QCarbAux* est choisie en comparant la puissance instantanée P_{M2m} du moteur électrique à la puissance de référence P_{M2réf} et
- si P_{M2m}<P_{M2réf}, on commande un débit de carburant auxiliaire QCarbAux* tel qu'il réduit le débit carburant QCarb injecté dans la chambre de combustion du moteur thermique, diminuant ainsi la puissance P_{M1} du moteur thermique ;
- si P_{M2m}>P_{M2réf}, on commande un débit de carburant auxiliaire QCarbAux* tel qu'il augmente le débit carburant QCarb injecté dans la chambre de combustion du moteur thermique, augmentant ainsi la puissance P_{M1} du moteur thermique ;
- si P_{M2m}=P_{M2réf}, on maintient la commande de débit QCarbAux* constante.

La puissance de référence P_{M2réf} est choisie pour moduler la puissance délivrée par le moteur thermique avec une marge de pilotage suffisante.

Le terme de « marge de pilotage » fait référence à l'autorité maximum du moteur électrique pour faire varier la puissance totale délivrée au propulseur autour de la puissance moyenne délivrée par le moteur thermique. En d'autres termes, le moteur électrique et sa chaîne de puissance (électronique de puissance, batterie s'il est alimenté par ce moyen) sont limités par conception dans une plage de puissance bornée. Cette plage peut être uniquement positive ou s'étendre aussi dans un domaine négatif si la chaine de puissance du moteur électrique est capable de prélever de la puissance sur la boîte de transmission principale (par exemple en rechargeant la batterie). Le choix de P_{M2réf} permet donc d'ajuster la puissance moyenne à la laquelle le moteur électrique va travailler dans son domaine opérationnel. Un exemple de choix judicieux est de positionner P_{M2réf} au milieu de la plage du moteur électrique pour qu'en cas de variation rapide (positive ou négative) de besoin en puissance du propulseur, le moteur électrique ait le maximum d'autorité pour s'adapter à ce besoin. Cela permet de maximiser les performances de régulation de la vitesse de rotation du propulseur.

Selon un autre mode de réalisation de l'invention, une consigne de vitesse de rotation N_{M1réf} étant envoyée au système de régulation de secours du moteur thermique, on mesure la vitesse instantanée N_{M1m} du moteur thermique et on la compare à la consigne de vitesse de rotation N_{M1réf} :
- si N_{M1réf}<N_{M1m}, on commande un débit de carburant auxiliaire QCarbAux* tel qu'il réduit le débit carburant QCarb injecté dans la chambre de combustion du moteur thermique, diminuant ainsi la puissance P_{M1} du moteur thermique ;
- si N_{M1réf}>N_{M1m}, on commande un débit de carburant auxiliaire QCarbAux* tel qu'il augmente le débit carburant QCarb injecté dans la chambre de combustion du moteur thermique, augmentant ainsi la puissance P_{M1} du moteur thermique ; et
- si N_{M1réf}=N_{M1m}, on maintient la commande de débit QCarbAux* constante ;
   et simultanément, on compare la puissance instantanée P_{M2m} du moteur électrique à la puissance de référence P_{M2réf} et
- si P_{M2m}<P_{M2réf}, la consigne de vitesse de rotation du moteur thermique N_{M1réf} est réduite ;
- si P_{M2m}>P_{M2réf}, la consigne de vitesse de rotation du moteur thermique N_{M1réf} est rehaussée.

L'invention concerne également un dispositif de régulation de la vitesse de rotation (Nₚ) d'un propulseur d'un groupe propulsif hybride pour aéronef, en situation de panne du système de régulation principal du moteur thermique du groupe propulsif hybride, le groupe propulsif hybride comprenant :
- le propulseur et une boite de transmission principale, apte à entrainer le propulseur ;
- le moteur thermique et au moins un moteur électrique, montés en parallèle sur la boite de transmission principale, le moteur thermique étant muni d'un circuit carburant apte à amener du carburant dans une chambre de combustion du moteur thermique ;
- un système de régulation principal du moteur thermique, apte à réguler la vitesse de rotation du moteur thermique ;
- un système de régulation de secours du moteur thermique, apte à réguler la vitesse de rotation du moteur thermique lorsque le système de régulation principal est en panne ;
- un système de régulation du moteur électrique, apte à réguler la vitesse de rotation du moteur électrique ;
- un système de contrôle de l'aéronef, apte à envoyer une consigne de vitesse ou de puissance à chacun des moyens de régulation du moteur thermique et du moteur électrique ;
le dispositif comprenant en outre, lorsque le système de régulation principal du moteur thermique est en panne et que ledit système est figé sur une commande de débit de carburant QCarbP*, des moyens configurés pour :
- envoyer une consigne de vitesse N_{M2réf} au système de régulation du moteur électrique, pour que le système de régulation du moteur électrique envoie une commande de puissance P_{M2}* au moteur électrique, moyennant quoi une puissance instantanée P_{M2m} du moteur électrique est obtenue ;
- simultanément, envoyer une consigne de vitesse de rotation ou de puissance au système de régulation de secours du moteur thermique, pour que le système de régulation de secours envoie une commande de débit de carburant QCarbAux* au circuit carburant du moteur thermique, la commande QCarbAux* étant choisie de manière à faire varier le débit carburant QCarb injecté dans la chambre de combustion du moteur thermique selon que l'on souhaite augmenter ou diminuer la puissance P_{M1} du moteur thermique.

Selon une variante, une consigne de puissance de référence du moteur électrique P_{M2réf}* étant envoyée au système de régulation de secours du moteur thermique, la commande de débit de carburant QCarbAux* est choisie en comparant la puissance instantanée P_{M2m} du moteur électrique à la puissance de référence P_{M2réf}, et dans lequel le dispositif comprend des moyens configurés pour :
- si P_{M2m}<P_{M2réf}, commander un débit de carburant auxiliaire QCarbAux* tel qu'il réduit le débit carburant QCarb injecté dans la chambre de combustion du moteur thermique, diminuant ainsi la puissance P_{M1} du moteur thermique ;
- si P_{M2m}>P_{M2réf}, commander un débit de carburant auxiliaire QCarbAux* tel qu'il augmente le débit carburant QCarb injecté dans la chambre de combustion du moteur thermique, augmentant ainsi la puissance P_{M1} du moteur thermique ;
- si P_{M2m}=P_{M2réf}, maintenir la commande de débit QCarbAux* constante.

Selon une autre variante, une consigne de vitesse de rotation N_{M1réf} étant envoyée au système de régulation de secours du moteur thermique, on mesure la vitesse instantanée N_{M1m} du moteur thermique et on la compare à la consigne de vitesse de rotation N_{M1réf} et dans lequel le dispositif comprend des moyens configurés pour :
- si N_{M1réf}<N_{M1m}, commander un débit de carburant auxiliaire QCarbAux* tel qu'il réduit le débit carburant QCarb injecté dans la chambre de combustion du moteur thermique, diminuant ainsi la puissance P_{M1} du moteur thermique ;
- si N_{M1réf}>N_{M1m}, commander un débit de carburant auxiliaire QCarbAux* tel qu'il augmente le débit carburant QCarb injecté dans la chambre de combustion du moteur thermique, augmentant ainsi la puissance P_{M1} du moteur thermique ; et
- si N_{M1réf}=N_{M1m}, maintenir la commande de débit QCarbAux* constante ;
   et simultanément, comparer la puissance instantanée P_{M2m} du moteur électrique à la puissance de référence P_{M2réf} et
- si P_{M2m}<P_{M2réf}, réduire la consigne de vitesse de rotation du moteur thermique N_{M1réf} ;
- si P_{M2m}>P_{M2réf}, rehausser la consigne de vitesse de rotation du moteur thermique N_{M1réf}.

L'invention concerne également un produit programme d'ordinateur comprenant des instructions qui, lorsque le programme est exécuté par un ordinateur, conduisent celui-ci à mettre en œuvre le procédé tel que décrit ci-dessus.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 représente un exemple d'une architecture hybride parallèle selon l'art antérieur;
- la figure 2 représente un exemple d'une architecture hybride parallèle utilisée par le procédé selon l'invention ;
- la figure 3 représente un détail de l'architecture hybride parallèle utilisée par le procédé selon l'invention dans un mode de réalisation ;
- la figure 4 représente un détail de l'architecture hybride parallèle utilisée par le procédé selon l'invention dans un autre mode de réalisation.

### EXPOSÉ DÉTAILLÉ DE MODES DE RÉALISATION PARTICULIERS

La solution proposée par l'invention est une architecture de contrôle de la vitesse de rotation d'un propulseur, qui permet de continuer à moduler la puissance délivrée par les deux moteurs, malgré la panne du système de régulation principal du moteur thermique.

Cette solution peut s'appliquer à tout groupe propulsif hybride parallèle où au moins un moteur électrique et au moins un moteur thermique (par exemple une turbine à gaz) entrainent, en parallèle, une boîte de transmission vers un propulseur, qui peut être, par exemple, un rotor, une hélice de turbopropulseur, ou une soufflante de turboréacteur. Cette architecture peut par exemple permettre de contrôler la vitesse de rotation d'un rotor d'hélicoptère.

La méthode de modulation de la puissance du moteur 1 selon l'invention n'est pas limitative en termes d'implémentation physique des différents systèmes de régulation.

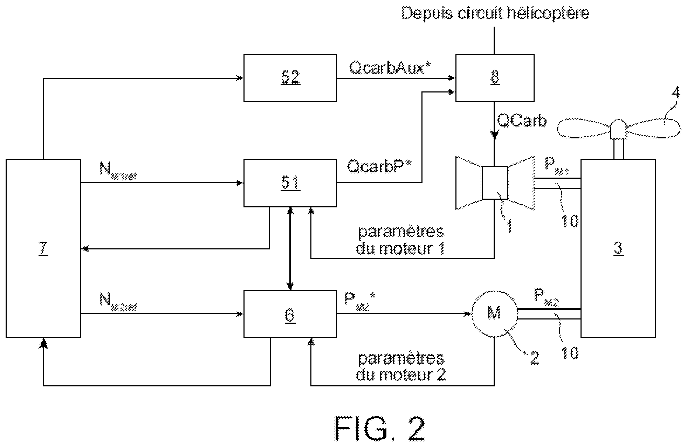

Une implémentation particulièrement avantageuse de l'invention, mais non limitative, est décrite dans la figure 2.

Dans la figure 2, le groupe propulsif hybride parallèle comporte, comme dans la figure 1, une boite de transmission principale 3, un propulseur 4, un moteur principal thermique (moteur 1), un moteur secondaire électrique (moteur 2), un système de régulation 6 du moteur 2, et un système de contrôle 7 de l'aéronef.

À la différence de la figure 1 de l'art antérieur, le système de régulation 5 du moteur 1 est ici remplacé par un système de régulation principal 51 du moteur 1 capable de réguler la vitesse de rotation du moteur 1 en modulant la puissance délivrée par le moteur 1 à travers la commande de débit carburant principal QCarbP* envoyée au circuit carburant 8 du moteur 1. Cette commande de débit carburant principal QCarbP* fait varier le débit carburant QCarb qui est injecté dans la chambre de combustion du moteur 1. Il est à noter que les références 1 (moteur thermique) et 8 (circuit carburant) de la figure 2 correspondent, avec un niveau de détails plus précis, à la référence 18 de la figure 1 (le moteur thermique 18 de la figure 1 comprenant un circuit carburant qui n'est pas représenté).

Il y a également un système de régulation de secours 52 du moteur 1 capable de moduler la puissance P_{M1} délivrée par le moteur 1, en commandant un débit carburant auxiliaire QCarbAux*. Le système de régulation de secours 52 du moteur 1 est indépendant du système de régulation principal 51, de sorte qu'une panne du système principal 51 n'affecte pas en même temps le système de secours 52.

La commande de débit carburant auxiliaire QCarbAux* peut indifféremment augmenter ou diminuer le débit carburant QCarb, qui est délivré par le circuit carburant 8 du moteur 1 et qui est injecté dans la chambre de combustion du moteur 1. Ce débit carburant auxiliaire vient donc s'ajouter ou se retrancher du débit carburant QCarbP commandé par le système de régulation principal 51.

La modulation du débit carburant QCarb, à la hausse ou à la baisse par rapport à la valeur figée QCarbP*, peut être réalisée par un organe électro-hydraulique situé dans le circuit carburant 8 du moteur 1, que l'on appelle « vanne de dosage auxiliaire ». Un organe électro-hydraulique (« vanne de dosage principal »), lui aussi situé dans le circuit carburant 8 du moteur 1, module lui aussi le débit carburant QCarb, sauf lorsque le système de régulation du moteur 1 tombe en panne et que la commande QCarbP* est bloquée. L'architecture du circuit et la présence de la vanne de dosage auxiliaire permettent d'augmenter ou de diminuer le débit initialement figé par la vanne de dosage principal. Il y a donc deux organes hydrauliques différents, respectivement pour le dosage principal et auxiliaire.

Le système de régulation de secours 52 du moteur 1 est indépendant du système de régulation principal 51, de sorte qu'une panne du système de régulation principal 51 n'affecte pas en même temps l'autre système.

De façon privilégiée, mais non limitative (et comme représenté dans la figure 2), le système de régulation principal 51 du moteur 1 peut échanger des informations avec le système de régulation 6 du moteur 2, afin de coordonner la puissance délivrée par chacun des moteurs lorsqu'ils fonctionnent simultanément. Selon cette réalisation particulière, le système de régulation principal 51 du moteur 1 peut agir sur la puissance délivrée par le moteur 2.

Selon l'architecture représentée dans la figure 2, en cas de panne totale du système de régulation principal 51 du moteur 1, la commande de débit carburant principal QCarbP* est figée, mais le système de contrôle de l'aéronef 7 peut continuer à réguler la vitesse de rotation du propulseur, quelle que soit la puissance affichée par le moteur 1 au moment de la panne, grâce :
- au moteur 2 et à son système de régulation 6 dédié ; et
- au système de régulation de secours 52 du moteur 1.

On fait l'hypothèse que, du fait de la panne du système de régulation principal 51 du moteur 1, plus aucune information traitée par le système de régulation principal 51 n'est disponible. En particulier, la mesure de la puissance délivrée par le moteur 1 P_{M1}, au moment où le débit carburant principal QCarbP a été figé, n'est pas disponible.

Cette régulation de secours du moteur 1 au moyen du système de régulation de secours 52 peut offrir des performances dégradées par rapport au système de régulation principal 51, en particulier en matière de dynamiques de régulation de la puissance.

Aussi, dans cette situation de panne, le contrôle de la vitesse de rotation du propulseur peut être réalisé de façon privilégiée selon le mode de réalisation suivant.

On configure le système de régulation de secours 52 du moteur 1 pour qu'il assure une modulation lente de la puissance délivrée par le moteur 1. Pour ce faire, le système de régulation de secours 52 module la commande de débit carburant auxiliaire QCarbAux* de façon à ce que le moteur 1 délivre une puissance P_{M1} adaptée, qui peut être inférieure aux besoins en puissance du propulseur. Le système de régulation de secours 52 adapte ainsi de manière « grossière » la puissance délivrée par le moteur 1 à la situation de vol de l'aéronef (par exemple, dans le cas d'un hélicoptère, montée, croisière, descente, etc.).

En parallèle, et simultanément, le système de régulation 6 du moteur 2 fait varier rapidement et au juste besoin la puissance P_{M2} délivrée par le moteur 2 en régulant « finement » la vitesse de rotation du propulseur. La puissance délivrée par le moteur 2 P_{M2} s'ajoute alors à celle délivrée par le moteur 1 P_{M1} pour satisfaire les besoins du propulseur. La puissance totale délivrée au propulseur profite ainsi de la dynamique rapide du moteur 2 pour répondre aux besoins de variations de puissances instantanées du propulseur.

Le caractère « lent » de l'adaptation en temps réel de la commande QCarbAux* permet au moteur 2 (plus rapide que le moteur 1) de parfaitement compenser la puissance additionnelle apportée au rotor avec la commande P_{M2}*. Le fait que les variations du moteur 1 soient « lentes » permet d'éviter des risques de perturbations dynamiques entre la régulation des deux moteurs, ce qui générerait des oscillations de puissance et/ou de vitesse du propulseur 4, néfastes pour le pilotage.

La modulation lente de la puissance délivrée par le moteur 1 P_{M1} peut être réalisée en déterminant les besoins en puissance de l'aéronef. Pour ce faire, cette détermination peut se baser sur un ou plusieurs éléments listés ci-dessous et de façon non limitative :
- une commande ou une mesure de pas collectif de l'aéronef ;
- une information d'anticipation de puissance venant de l'aéronef ;
- la puissance délivrée par le moteur 2 P_{M2}, moyennée sur une certaine durée ;
- toute autre information permettant d'estimer le niveau moyen de besoin en puissance du propulseur.

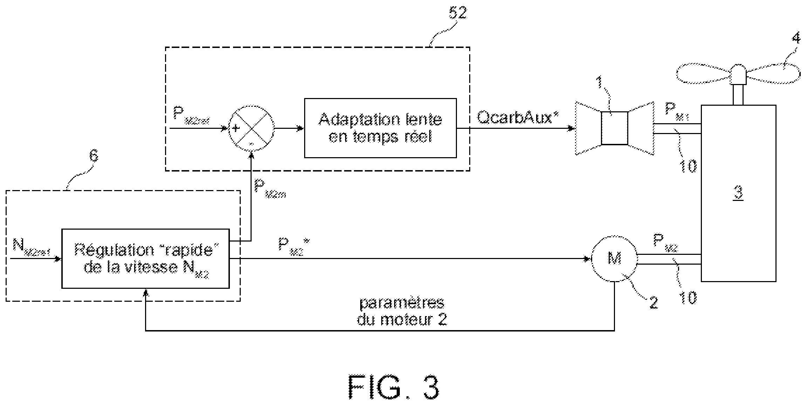

Une solution avantageuse pour moduler la puissance du moteur 1 P_{M1} est décrite dans la figure 3. Elle consiste à réguler la vitesse de rotation du propulseur à travers la régulation de la vitesse de rotation N_{M2} du moteur 2. Cette régulation peut être « rapide », afin de faire varier efficacement la puissance délivrée au propulseur autour d'une puissance moyenne.

La puissance instantanée du moteur 2 P_{M2m}, nécessaire au maintien de la vitesse de rotation du propulseur sur sa consigne, est utilisée par le système de régulation de secours 52 du moteur 1 pour la comparer à une puissance de référence P_{M2réf} choisie par conception pour garantir une marge de pilotage satisfaisante. Ainsi :
- si la puissance instantanée délivrée par le moteur 2 P_{M2m} est inférieure à la puissance de référence P_{M2réf}, le système de régulation de secours 52 du moteur 1 commande un débit carburant auxiliaire QCarbAux* tel qu'il réduit le débit carburant QCarb injecté dans la chambre de combustion du moteur 1 ;
- inversement, si la puissance instantanée délivrée par le moteur 2 P_{M2m} est supérieure à la puissance de référence P_{M2réf}, le système de régulation de secours 52 commande un débit carburant auxiliaire QCarbAux* tel qu'il augmente le débit carburant QCarb injecté dans la chambre de combustion du moteur 1, augmentant ainsi la puissance du moteur 1.

QCarbAux* est une commande de débit carburant auxiliaire du moteur 1 qui est adaptée aux besoins moyens du propulseur. Cette commande QCarbAux* peut être négative, afin de diminuer la puissance du moteur 1 en dessous de la puissance qu'il affichait au moment de la panne du système de régulation principal 51, ou positive.

On note que cette méthode de modulation lente de la puissance délivrée par le moteur 1 selon ce mode de réalisation n'utilise aucune information sur l'état du moteur 1. Ce mode de réalisation ne nécessite donc pas de moyen de mesure dédié au système de secours.

Cette modulation lente de la puissance délivrée par le moteur 1 P_{M1} a pour objectif de maintenir la puissance moyenne délivrée par le moteur 2 à un niveau choisi, par exemple au milieu de la plage de puissance du moteur 2. Ce choix permet de maximiser l'amplitude de variation rapide de la puissance du propulseur. La régulation de la puissance du moteur 1 doit être suffisamment lente pour à la fois :
- être compatible avec le fonctionnement du système de régulation de secours du moteur 1 ; et
- que la modulation de la puissance du moteur 1 ne perturbe pas la régulation de vitesse de rotation du moteur 2.

Les principaux avantages de cette méthode de modulation lente de la puissance délivrée par le moteur 1 proposée dans le cadre de l'invention sont :
- de pouvoir maintenir le moteur principal (ici, le moteur 1) en fonctionnement, quel que soit le niveau de puissance auquel il est au moment où la panne du système de régulation principal apparaît ;
- d'offrir le maximum de marge en puissance au pilote pour réaliser la fin du vol jusqu'à l'atterrissage, ce qui garantit le maximum de sécurité ;
- de garantir la stabilité de la régulation de la vitesse de rotation du propulseur grâce au découplage fréquentiel entre les deux moteurs, à savoir la modulation lente de la puissance du moteur 1 et la régulation rapide de la vitesse de rotation par le moteur 2 ;
- de minimiser la puissance demandée au moteur 2, ce qui minimise aussi la puissance prélevée sur la batterie qui l'alimente et augmente ainsi son autonomie. Cet aspect a deux intérêts, à savoir, d'une part, de permettre au pilote d'avoir plus de temps, et donc une distance franchissable plus importante, pour réaliser l'atterrissage d'urgence (intérêt sécuritaire) et, d'autre part, l'autonomie offerte peut également permettre au pilote de terminer son vol jusqu'à rejoindre son point d'arrivée prévu, ou de revenir se poser sur la base de départ afin de pouvoir réaliser les opérations de maintenance nécessaires (intérêt opérationnel).

Comme précisé précédemment, la méthode de modulation de la puissance du moteur 1 telle que décrite dans la figure 3 est une implémentation particulièrement avantageuse, mais non limitative et elle peut prendre différentes formes. En effet, l'invention proposée n'est pas limitative en termes d'implémentation physique des différents systèmes de régulation cités précédemment.

Ainsi, le système de régulation de secours 52 du moteur 1 peut par exemple faire partie du moteur 1 lui-même ou être intégré dans le système de contrôle 7 de l'aéronef.

La régulation de la vitesse de rotation du propulseur en situation de panne du système de régulation principal 51 du moteur 1 peut, quant à elle, être implémentée par exemple dans le système de régulation du moteur 2 ou dans le système de contrôle de l'aéronef.

Le système de régulation 6 du moteur 2 peut lui-même faire partie (partiellement ou totalement) du système de contrôle 7 de l'aéronef.

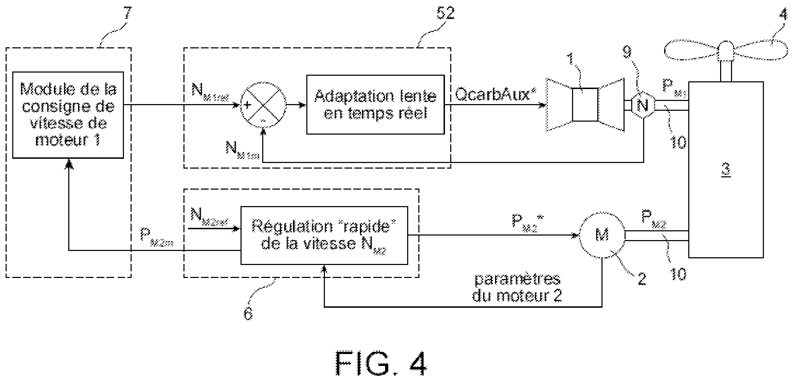

Parmi les autres formes d'implémentation évoquées ci-dessus, on peut présenter le mode de réalisation décrit dans la figure 4. Ici, le système de régulation de secours 52 du moteur 1 régule la vitesse de rotation du moteur 1 sur la consigne N_{M1réf}. Pour ce faire, il utilise une chaine de mesure de vitesse de rotation 9 de la turbine libre du moteur 1, qui est indépendante des éventuels moyens de mesure du système de régulation principal 51 et qui mesure la vitesse de rotation du moteur 1 N_{M1}. Selon un autre mode de réalisation non représenté, on peut également utiliser une chaine de mesure de vitesse de rotation du propulseur 4.

À la différence des turbomoteurs classiques (sans hybridation parallèle), la consigne de vitesse de rotation N_{M1réf} est, dans ce mode de réalisation, régulée en fonction de la puissance instantanée délivrée par le moteur 2 P_{M2m}, afin de maintenir celle-ci à un niveau souhaité, selon les mêmes critères de choix que le mode de réalisation décrit dans la figure 3.

Ainsi :
- lorsque la puissance instantanée du moteur 2 P_{M2m} est supérieure au niveau désiré (puissance de référence P_{M2réf}), la consigne de vitesse de rotation du moteur 1 N_{M1réf} est rehaussée afin que le moteur 1 délivre plus de puissance ;
- et inversement, lorsque la puissance instantanée du moteur 2 P_{M2m} est trop basse, la consigne de vitesse de rotation du moteur 1 N_{M1réf} est réduite, de sorte que le moteur 1 délivre moins de puissance.

Dans la figure 4, la régulation de la consigne de vitesse du moteur 1 se fait dans le système de contrôle 7 de l'aéronef.

La comparaison entre P_{M2m} et P_{M2réf} est ici faite dans le bloc 7 « Modulation de la consigne de vitesse du moteur 1 » de la figure 4. Le schéma de comparaison est le même que le bloc 52 de la figure 3, à la différence que la sortie est la consigne de vitesse de rotation du moteur 1 N_{M1réf}, au lieu d'être la commande de débit auxiliaire QCarbAux*.

La comparaison entre N_{M1réf} et N_{M1} est l'opération qui permet de déterminer la commande de débit auxiliaire QCarbAux*. Le mode de réalisation illustré dans la figure 4 est moins direct que celui de la figure 3 puisqu'il fait intervenir deux boucles de régulation imbriquées : une première boucle en puissance P_{M2} qui génère la consigne N_{M1réf}, et une deuxième boucle en vitesse pour finalement générer la commande de débit auxiliaire QCarbAux*. Ce mode de réalisation présente l'avantage qu'il permet d'utiliser le système de régulation de secours du moteur 1 (le bloc 52 de la figure 4).

Il est à noter que certains éléments qui sont présents dans la figure 2 n'ont pas été représentés dans les figures 3 et 4, par exemple le système de contrôle de l'aéronef dans la figure 3, et le système de régulation principal du moteur 1 dans les figures 3 et 4. Ces éléments sont bien présents dans le groupe propulsif hybride selon l'invention, mais n'ont pas été représentés afin de faciliter la lecture des figures 3 et 4.

## Revendications

1. Procédé de régulation de la vitesse de rotation (Nₚ) d'un propulseur d'un groupe propulsif hybride pour aéronef, en situation de panne du système de régulation principal du moteur thermique du groupe propulsif hybride, le groupe propulsif hybride comprenant :
- le propulseur (4) et une boite de transmission principale (3), apte à entrainer le propulseur ;
- le moteur thermique (1) et au moins un moteur électrique (2), montés en parallèle sur la boite de transmission principale, le moteur thermique étant muni d'un circuit carburant (8) apte à amener du carburant dans une chambre de combustion du moteur thermique ;
- un système de régulation principal (51) du moteur thermique, apte à réguler la vitesse de rotation du moteur thermique ;
- un système de régulation de secours (52) du moteur thermique, apte à réguler la vitesse de rotation du moteur thermique lorsque le système de régulation principal est en panne ;
- un système de régulation (6) du moteur électrique, apte à réguler la vitesse de rotation du moteur électrique ;
- un système de contrôle (7) de l'aéronef, apte à envoyer une consigne de vitesse ou de puissance à chacun des moyens de régulation du moteur thermique et du moteur électrique ;
le procédé comprenant, lorsque le système de régulation principal (51) du moteur thermique est en panne et que ledit système est figé sur une commande de débit de carburant QCarbP*, l'étape consistant à :
- envoyer une consigne de vitesse N_{M2réf} au système de régulation (6) du moteur électrique, pour que le système de régulation (6) du moteur électrique envoie une commande de puissance P_{M2}* au moteur électrique (2), moyennant quoi une puissance instantanée P_{M2m} du moteur électrique est obtenue ; le procédé étant **caractérisé en ce qu'**il comporte en outre l'étape consistant à :
- simultanément, envoyer une consigne de vitesse de rotation ou de puissance au système de régulation de secours (52) du moteur thermique, pour que le système de régulation de secours (52) envoie une commande de débit de carburant QCarbAux* au circuit carburant (8) du moteur thermique (1), la commande QCarbAux* étant choisie de manière à faire varier le débit carburant QCarb injecté dans la chambre de combustion du moteur thermique selon que l'on souhaite faire varier la puissance P_{M1} du moteur thermique.

2. Procédé selon la revendication 1, dans lequel, une consigne de puissance de référence du moteur électrique P_{M2réf}* étant envoyée au système de régulation de secours (52) du moteur thermique, la commande de débit de carburant QCarbAux* est choisie en comparant la puissance instantanée P_{M2m} du moteur électrique à la puissance de référence P_{M2réf} et
- si P_{M2m}<P_{M2réf}, on commande un débit de carburant auxiliaire QCarbAux* tel qu'il réduit le débit carburant QCarb injecté dans la chambre de combustion du moteur thermique (1), diminuant ainsi la puissance P_{M1} du moteur thermique ;
- si P_{M2m}>P_{M2réf}, on commande un débit de carburant auxiliaire QCarbAux* tel qu'il augmente le débit carburant QCarb injecté dans la chambre de combustion du moteur thermique (1), augmentant ainsi la puissance P_{M1} du moteur thermique ;
- si P_{M2m}=P_{M2réf}, on maintient la commande de débit QCarbAux* constante.

3. Procédé selon la revendication 1, dans lequel une consigne de vitesse de rotation N_{M1réf} étant envoyée au système de régulation de secours (52) du moteur thermique, on mesure la vitesse instantanée N_{M1m} du moteur thermique et on la compare à la consigne de vitesse de rotation N_{M1réf} :
- si N_{M1réf}<N_{M1m}, on commande un débit de carburant auxiliaire QCarbAux* tel qu'il réduit le débit carburant QCarb injecté dans la chambre de combustion du moteur thermique (1), diminuant ainsi la puissance P_{M1} du moteur thermique ;
- si N_{M1réf}>N_{M1m}, on commande un débit de carburant auxiliaire QCarbAux* tel qu'il augmente le débit carburant QCarb injecté dans la chambre de combustion du moteur thermique (1), augmentant ainsi la puissance P_{M1} du moteur thermique ; et
- si N_{M1réf}=N_{M1m}, on maintient la commande de débit QCarbAux* constante ;
et simultanément, on compare la puissance instantanée P_{M2m} du moteur électrique à la puissance de référence P_{M2réf} et
- si P_{M2m}<P_{M2réf}, la consigne de vitesse de rotation du moteur thermique N_{M1réf} est réduite ;
- si P_{M2m}>P_{M2réf}, la consigne de vitesse de rotation du moteur thermique N_{M1réf} est rehaussée.

4. Dispositif de régulation de la vitesse de rotation (Nₚ) d'un propulseur d'un groupe propulsif hybride pour aéronef, en situation de panne du système de régulation principal du moteur thermique (1) du groupe propulsif hybride, le groupe propulsif hybride comprenant :
- le propulseur (4) et une boite de transmission principale (3), apte à entrainer le propulseur ;
- le moteur thermique (1) et au moins un moteur électrique (2), montés en parallèle sur la boite de transmission principale, le moteur thermique étant muni d'un circuit carburant (8) apte à amener du carburant dans une chambre de combustion du moteur thermique ;
- un système de régulation principal (51) du moteur thermique, apte à réguler la vitesse de rotation du moteur thermique ;
- un système de régulation de secours (52) du moteur thermique, apte à réguler la vitesse de rotation du moteur thermique lorsque le système de régulation principal est en panne ;
- un système de régulation (6) du moteur électrique, apte à réguler la vitesse de rotation du moteur électrique ;
- un système de contrôle (7) de l'aéronef, apte à envoyer une consigne de vitesse ou de puissance à chacun des moyens de régulation du moteur thermique et du moteur électrique ;
le dispositif comprenant en outre, lorsque le système de régulation (51) principal du moteur thermique est en panne et que ledit système est figé sur une commande de débit de carburant QCarbP*, des moyens configurés pour :
- envoyer une consigne de vitesse N_{M2réf} au système de régulation (6) du moteur électrique, pour que le système de régulation (6) du moteur électrique envoie une commande de puissance P_{M2}* au moteur électrique (2), moyennant quoi une puissance instantanée P_{M2m} du moteur électrique est obtenue ; le dispositif étant **caractérisé en ce que** lesdits moyens sont configurés pour :
- simultanément, envoyer une consigne de vitesse de rotation ou de puissance au système de régulation de secours (52) du moteur thermique, pour que le système de régulation de secours (52) envoie une commande de débit de carburant QCarbAux* au circuit carburant (8) du moteur thermique, la commande QCarbAux* étant choisie de manière à faire varier le débit carburant QCarb injecté dans la chambre de combustion du moteur thermique selon que l'on souhaite augmenter ou diminuer la puissance P_{M1} du moteur thermique.

5. Dispositif selon la revendication 4, dans lequel, une consigne de puissance de référence du moteur électrique P_{M2réf}* étant envoyée au système de régulation de secours (52) du moteur thermique, la commande de débit de carburant QCarbAux* est choisie en comparant la puissance instantanée P_{M2m} du moteur électrique à la puissance de référence P_{M2réf}, et dans lequel le dispositif comprend des moyens configurés pour :
- si P_{M2m}<P_{M2réf}, commander un débit de carburant auxiliaire QCarbAux* tel qu'il réduit le débit carburant QCarb injecté dans la chambre de combustion du moteur thermique (1), diminuant ainsi la puissance P_{M1} du moteur thermique ;
- si P_{M2m}>P_{M2réf}, commander un débit de carburant auxiliaire QCarbAux* tel qu'il augmente le débit carburant QCarb injecté dans la chambre de combustion du moteur thermique (1), augmentant ainsi la puissance P_{M1} du moteur thermique ;
- si P_{M2m}=P_{M2réf}, maintenir la commande de débit QCarbAux* constante.

6. Dispositif selon la revendication 4, dans lequel une consigne de vitesse de rotation N_{M1réf} étant envoyée au système de régulation de secours (52) du moteur thermique, on mesure la vitesse instantanée N_{M1m} du moteur thermique et on la compare à la consigne de vitesse de rotation N_{M1réf} et dans lequel le dispositif comprend des moyens configurés pour :
- si N_{M1réf}<N_{M1m}, commander un débit de carburant auxiliaire QCarbAux* tel qu'il réduit le débit carburant QCarb injecté dans la chambre de combustion du moteur thermique (1), diminuant ainsi la puissance P_{M1} du moteur thermique ;
- si N_{M1réf}>N_{M1m}, commander un débit de carburant auxiliaire QCarbAux* tel qu'il augmente le débit carburant QCarb injecté dans la chambre de combustion du moteur thermique (1), augmentant ainsi la puissance P_{M1} du moteur thermique ; et
- si N_{M1réf}=N_{M1m}, maintenir la commande de débit QCarbAux* constante ;
et simultanément, comparer la puissance instantanée P_{M2m} du moteur électrique à la puissance de référence P_{M2réf} et
- si P_{M2m}<P_{M2réf}, réduire la consigne de vitesse de rotation du moteur thermique N_{M1réf} ;
- si P_{M2m}>P_{M2réf}, rehausser la consigne de vitesse de rotation du moteur thermique N_{M1réf}.

7. Produit programme d'ordinateur comprenant des instructions qui, lorsque le programme est exécuté par un dispositif de régulation de la vitesse de rotation (Nₚ) selon la revendication 4, conduisent celui-ci à mettre en œuvre les étapes du procédé selon l'une quelconque des revendications 1 à 3.

## Patentansprüche

1. Verfahren zur Regelung der Drehzahl (Nₚ) eines Triebwerks eines Hybridantriebsaggregats für Flugzeuge in einer Störungssituation des Hauptregelsystems des Verbrennungsmotors des Hybridantriebsaggregats, wobei das Hybridantriebsaggregat umfasst:
- das Triebwerk (4) und ein Hauptgetriebe (3), das dazu ausgelegt ist, das Triebwerk anzutreiben;
- den Verbrennungsmotor (1) und mindestens einen Elektromotor (2), die parallel am Hauptgetriebe montiert sind, wobei der Verbrennungsmotor mit einem Kraftstoffkreislauf (8) ausgestattet ist, der Kraftstoff in eine Verbrennungskammer des Verbrennungsmotors führen kann;
- ein Hauptregelsystem (51) des Verbrennungsmotors, das die Drehzahl des Verbrennungsmotors regeln kann;
- ein Notregelsystem (52) des Verbrennungsmotors, das dazu ausgelegt ist, die Drehzahl des Verbrennungsmotors zu regeln, wenn das Hauptregelsystem ausgefallen ist;
- ein Regelsystem (6) des Elektromotors, das die Drehzahl des Elektromotors regeln kann;
- ein Steuersystem (7) des Flugzeugs, das dazu ausgelegt ist, einen Geschwindigkeits- oder Leistungssollwert an jedes der Regelmittel des Verbrennungsmotors und des Elektromotors zu senden;
wobei das Verfahren, wenn das Hauptregelsystem (51) des Verbrennungsmotors ausgefallen ist und das System auf eine Kraftstoffdurchflusssteuerung QCarbP* festgelegt ist, den Schritt umfasst, bestehend aus:
- Senden eines Drehzahlsollwerts N_{M2ref} an das Regelsystem (6) des Elektromotors, damit das Regelsystem (6) des Elektromotors einen Leistungsbefehl P_{M2}* an den Elektromotor (2) sendet, wodurch eine momentane Leistung P_{M2m} des Elektromotors erreicht wird; wobei das Verfahren **dadurch gekennzeichnet ist, dass** es weiter den Schritt aufweist, bestehend aus:
- gleichzeitigem Senden eines Drehzahl- oder Leistungssollwerts an das Notregelsystem (52) des Verbrennungsmotors, damit das Notregelsystem (52) eine Kraftstoffdurchflusssteuerung QCarbAux* an den Kraftstoffkreislauf (8) des Verbrennungsmotors (1) sendet, wobei die Steuerung QCarbAux* so ausgewählt ist, dass die in die Verbrennungskammer des Verbrennungsmotors eingespritzte Kraftstoffmenge QCarb variiert, je nachdem, ob die Leistung P_{M1} des Verbrennungsmotors variiert werden soll.

2. Verfahren nach Anspruch 1, wobei, wenn eine Referenzleistungsvorgabe des Elektromotors P_{M2ref}* an das Notregelsystem (52) des Verbrennungsmotors gesendet wird, die Kraftstoffdurchflusssteuerung QCarbAux* durch Vergleichen der momentanen Leistung P_{M2m} des Elektromotors mit der Referenzleistung P_{M2ref} ausgewählt wird und
- wenn P_{M2m}<P_{M2ref}, wird eine Hilfskraftstoffmenge QCarbAux* gesteuert, so dass die in die Verbrennungskammer des Verbrennungsmotors (1) eingespritzte Kraftstoffmenge QCarb verringert wird, wodurch die Leistung P_{M1} des Verbrennungsmotors verringert wird;
- wenn P_{M2m}>P_{M2ref}, wird eine Hilfskraftstoffmenge QCarbAux* gesteuert, so dass die in die Verbrennungskammer des Verbrennungsmotors (1) eingespritzte Kraftstoffmenge QCarb erhöht wird, wodurch die Leistung P_{M1} des Verbrennungsmotors erhöht wird;
- wenn P_{M2m}=P_{M2ref}, die Durchflusssteuerung QCarbAux* konstant gehalten wird.

3. Verfahren nach Anspruch 1, wobei ein Drehzahlsollwert N_{M1ref} an das Notregelsystem (52) des Verbrennungsmotors gesendet wird, die momentane Drehzahl N_{M1m} des Verbrennungsmotors gemessen wird und mit dem Drehzahlsollwert N_{M1ref} verglichen wird:
- wenn N_{M1ref}<N_{M1m}, wird eine Hilfskraftstoffmenge QCarbAux* gesteuert, so dass die in die Verbrennungskammer des Verbrennungsmotors (1) eingespritzte Kraftstoffmenge QCarb verringert wird, wodurch die Leistung P_{M1} des Verbrennungsmotors verringert wird;
- wenn N_{M1ref}>N_{M1m}, wird eine Hilfskraftstoffmenge QCarbAux* gesteuert, so dass die in die Verbrennungskammer des Verbrennungsmotors (1) eingespritzte Kraftstoffmenge QCarb erhöht wird, wodurch die Leistung P_{M1} des Verbrennungsmotors erhöht wird; und
- wenn N_{M1ref}=N_{M1m}, wird die Durchflusssteuerung QCarbAux* konstant gehalten;
und gleichzeitig wird die momentane Leistung P_{M2m} des Elektromotors mit der Referenzleistung P_{M2ref} verglichen und
- wenn P_{M2m}<P_{M2ref}, wird der Drehzahlsollwert des Verbrennungsmotors N_{M1ref} reduziert;
- wenn P_{M2m}>P_{M2ref}, wird der Drehzahlsollwert des Verbrennungsmotors N_{M1ref} erhöht.

4. Drehzahlregelvorrichtung (Nₚ) eines Triebwerks eines Hybridantriebssystems für Flugzeuge, in einer Störungssituation des Hauptregelsystems des Verbrennungsmotors (1) des Hybridantriebssystems, wobei das Hybridantriebssystem umfasst:
- das Triebwerk (4) und ein Hauptgetriebe (3), das dazu ausgelegt ist, das Triebwerk anzutreiben;
- den Verbrennungsmotor (1) und mindestens einen Elektromotor (2), die parallel am Hauptgetriebe montiert sind, wobei der Verbrennungsmotor mit einem Kraftstoffkreislauf (8) ausgestattet ist, der Kraftstoff in eine Verbrennungskammer des Verbrennungsmotors führen kann;
- ein Hauptregelsystem (51) des Verbrennungsmotors, das die Drehzahl des Verbrennungsmotors regeln kann;
- ein Notregelsystem (52) des Verbrennungsmotors, das dazu ausgelegt ist, die Drehzahl des Verbrennungsmotors zu regeln, wenn das Hauptregelsystem ausgefallen ist;
- ein Regelsystem (6) des Elektromotors, das die Drehzahl des Elektromotors regeln kann;
- ein Steuersystem (7) des Flugzeugs, das dazu ausgelegt ist, einen Geschwindigkeits- oder Leistungssollwert an jedes der Regelmittel des Verbrennungsmotors und des Elektromotors zu senden;
wobei die Vorrichtung weiter, wenn das Hauptregelsystem (51) des Verbrennungsmotors ausgefallen ist und das System auf eine Kraftstoffdurchflusssteuerung QCarbP* festgelegt ist, Mittel umfasst, die zu Folgendem ausgebildet sind:
- Senden eines Drehzahlsollwerts N_{M2ref} an das Regelsystem (6) des Elektromotors, damit das Regelsystem (6) des Elektromotors einen Leistungsbefehl P_{M2}* an den Elektromotor (2) sendet, wodurch eine momentane Leistung P_{M2m} des Elektromotors erreicht wird; wobei die Vorrichtung **dadurch gekennzeichnet ist, dass** die Mittel zu Folgendem ausgebildet sind:
- gleichzeitigem Senden eines Drehzahl- oder Leistungssollwerts an das Notregelsystem (52) des Verbrennungsmotors, damit das Notregelsystem (52) eine Kraftstoffdurchflusssteuerung QCarbAux* an den Kraftstoffkreislauf (8) des Verbrennungsmotors sendet, wobei die Steuerung QCarbAux* so gewählt ist, dass die in die Verbrennungskammer des Verbrennungsmotors eingespritzte Kraftstoffmenge QCarb variiert, je nachdem, ob die Leistung P_{M1} des Verbrennungsmotors erhöht oder verringert werden soll.

5. Vorrichtung nach Anspruch 4, wobei ein Referenzleistungssollwert des Elektromotors P_{M2ref}* an das Notregelsystem (52) des Verbrennungsmotors gesendet wird, die Kraftstoffdurchflusssteuerung QCarbAux* durch Vergleich der momentanen Leistung P_{M2m} des Elektromotors mit der Referenzleistung P_{M2ref} ausgewählt wird, und wobei die Vorrichtung Mittel umfasst, die zu Folgendem ausgebildet sind:
- wenn P_{M2m}<P_{M2ref}, Steuern einer Hilfskraftstoffmenge QCarbAux*, so dass die in die Verbrennungskammer des Verbrennungsmotors (1) eingespritzte Kraftstoffmenge QCarb verringert wird, wodurch die Leistung P_{M1} des Verbrennungsmotors verringert wird;
- wenn P_{M2m}>P_{M2ref}, Steuern einer zusätzlichen Kraftstoffmenge QCarbAux*, so dass die in die Verbrennungskammer des Verbrennungsmotors (1) eingespritzte Kraftstoffmenge QCarb erhöht wird, wodurch die Leistung P_{M1} des Verbrennungsmotors erhöht wird;
- wenn P_{M2m}=P_{M2ref}, Konstanthalten der Durchflusssteuerung QCarbAux*.

6. Vorrichtung nach Anspruch 4, wobei ein Drehzahlsollwert N_{M1ref} an das Notregelsystem (52) des Verbrennungsmotors gesendet wird, die momentane Drehzahl N_{M1m} des Verbrennungsmotors gemessen und mit dem Drehzahlsollwert N_{M1ref} verglichen wird und wobei die Vorrichtung Mittel umfasst, die zu Folgendem ausgebildet sind:
- wenn N_{M1ref}<N_{M1m}, Steuern einer Hilfskraftstoffmenge QCarbAux*, so dass die in die Verbrennungskammer des Verbrennungsmotors (1) eingespritzte Kraftstoffmenge QCarb verringert wird, wodurch die Leistung P_{M1} des Verbrennungsmotors verringert wird;
- wenn N_{M1ref}>N_{M1m}, Steuern einer Hilfskraftstoffmenge QCarbAux*, so dass die in die Verbrennungskammer des Verbrennungsmotors (1) eingespritzte Kraftstoffmenge QCarb erhöht wird, wodurch die Leistung P_{M1} des Verbrennungsmotors erhöht wird; und
- wenn N_{M1ref}=N_{M1m}, Konstanthalten der Durchflusssteuerung QCarbAux*;
und gleichzeitig, Vergleichen der momentanen Leistung P_{M2m} des Elektromotors mit der Referenzleistung P_{M2ref} und
- wenn P_{M2m}<P_{M2ref}, Verringern des Drehzahlsollwerts des Verbrennungsmotors N_{M1ref};
- wenn P_{M2m}>P_{M2ref}, Erhöhen des Drehzahlsollwerts des Verbrennungsmotors N_{M1ref}.

7. Computerprogrammprodukt, das Befehle umfasst, die, wenn das Programm von einer Drehzahlregelvorrichtung (Nₚ) nach Anspruch 4 ausgeführt wird, diese veranlassen, die Verfahrensschritte nach einem der Ansprüche 1 bis 3 durchzuführen.

## Claims

1. A method for regulating the rotational speed (Nₚ) of a propulsion device of a hybrid propulsion unit for an aircraft, in the event of failure of the main regulation system of the heat engine of the hybrid propulsion unit, the hybrid propulsion unit comprising:
- the propulsion device (4) and a main gearbox (3), capable of driving the propulsion device;
- the heat engine (1) and at least one electric motor (2), mounted in parallel on the main gearbox, the heat engine being provided with a fuel circuit (8) capable of supplying fuel into a combustion chamber of the heat engine;
- a main regulation system (51) of the heat engine, capable of regulating the rotational speed of the heat engine;
- a backup regulation system (52) of the heat engine, capable of regulating the rotational speed of the heat engine when the main regulation system fails;
- a regulation system (6) of the electric motor, capable of regulating the rotational speed of the electric motor;
- a control system (7) of the aircraft, capable of sending a speed or power setpoint to each of the regulation means of the heat engine and of the electric motor;
the method comprising, when the main regulation system of the heat engine fails and said system is locked to a fuel flow command QCarbP*, the step of:
- sending a speed setpoint N_{M2ref} to the regulation system (6) of the electric motor, so that the regulation system (6) of the electric motor sends a power command P_{M2*} to the electric motor (2), whereby an instantaneous power P_{M2m} of the electric motor (2) is obtained; the method being **characterized in that** it further comprises the step of:
- simultaneously, sending a rotational speed or power setpoint to the backup regulation system (52) of the heat engine, so that the backup regulation system (52) sends a fuel flow command QCarbAux* to the fuel circuit (8) of the heat engine (1), the command QCarbAux* being selected so as to vary the fuel flow QCarb injected into the combustion chamber of the heat engine depending on whether it is desired to vary the power P_{M1} of the heat engine.

2. The method according to claim 1, wherein, a reference electric motor power setpoint P_{M2ref}* being sent to the backup regulation system (52) of the heat engine, the fuel flow command QCarbAux* is selected by comparing the instantaneous power P_{M2m} of the electric motor with the reference power P_{M2ref}, and
- if P_{M2m}<P_{M2ref}, an auxiliary fuel flow QCarbAux* is controlled such that it reduces the fuel flow QCarb injected into the combustion chamber of the heat engine (1), thereby reducing the power P_{M1} of the heat engine;
- if P_{M2m}>P_{M2ref}, an auxiliary fuel flow QCarbAux* is controlled such that it increases the fuel flow QCarb injected into the combustion chamber of the heat engine (1), thereby increasing the power P_{M1} of the heat engine;
- if P_{M2m}=P_{M2ref}, the flow command QCarbAux* is kept constant.

3. The method according to claim 1, wherein a rotational speed setpoint N_{M1ref} being sent to the backup regulation system (52) of the heat engine, the instantaneous speed N_{M1m} of the heat engine is measured and it is compared with the rotational speed setpoint N_{M1ref}:
- if N_{M1ref}<N_{M1m}, an auxiliary fuel flow QCarbAux* is controlled such that it reduces the fuel flow QCarb injected into the combustion chamber of the heat engine (1), thereby reducing the power P_{M1} of the heat engine;
- if N_{M1ref}>N_{M1m}, an auxiliary fuel flow QCarbAux* is controlled such that it increases the fuel flow QCarb injected into the combustion chamber of the heat engine (1), thereby increasing the power P_{M1} of the heat engine; and
- if N_{M1ref}=N_{M1m}, the flow command QCarbAux* is kept constant;
and simultaneously, the instantaneous power P_{M2m} of the electric motor is compared with the reference power P_{M2ref}, and
- if P_{M2m}<P_{M2ref}, the heat engine rotational speed setpoint N_{M1ref} is reduced;
- if P_{M2m}>P_{M2ref}, the heat engine rotational speed setpoint N_{M1ref} is raised.

4. A device for regulating the rotational speed (Nₚ) of a propulsion device of a hybrid propulsion unit for an aircraft, in the event of failure of the main regulation system of the heat engine (1) of the hybrid propulsion unit, the hybrid propulsion unit comprising:
- the propulsion device (4) and a main gearbox (3), capable of driving the propulsion device;
- the heat engine (1) and at least one electric motor (2), mounted in parallel on the main gearbox, the heat engine being provided with a fuel circuit (8) capable of transferring fuel into a combustion chamber of the heat engine;
- a main regulation system (51) of the heat engine, capable of regulating the rotational speed of the heat engine;
- a backup regulation system (52) of the heat engine, capable of regulating the rotational speed of the heat engine when the main regulation system fails;
- a regulation system (6) of the electric motor, capable of regulating the rotational speed of the electric motor;
- a control system (7) of the aircraft, capable of sending a speed or power setpoint to each of the regulation means of the heat engine and of the electric motor;
the device further comprising, when the main regulation system (51) of the heat engine fails and said system is locked to a fuel flow command QCarbP*, means configured to:
- send a speed setpoint N_{M2ref} to the regulation system (6) of the electric motor, so that the regulation system (6) of the electric motor sends a power command P_{M2*} to the electric motor (2), whereby an instantaneous power P_{M2m} of the electric motor is obtained; the device being **characterized in that** said means are configured to:
- simultaneously, send a rotational speed or power setpoint to the backup regulation system (52) of the heat engine, so that the backup regulation system (52) sends a fuel flow command QCarbAux* to the fuel circuit (8) of the heat engine, the command QCarbAux* is selected so as to vary the fuel flow QCarb injected into the combustion chamber of the engine depending on whether it is desired to increase or decrease the power P_{M1} of the heat engine.

5. The device according to claim 4, wherein, a reference electric motor power setpoint P_{M2ref}* being sent to the backup regulation system (52) of the heat engine, the fuel flow command QCarbAux* is selected by comparing the instantaneous power P_{M2m} of the electric motor with the reference power P_{M2ref}, and wherein the device comprises means configured to:
- if P_{M2m}<P_{M2ref}, control an auxiliary fuel flow QCarbAux* such that it reduces the fuel flow QCarb injected into the combustion chamber of the heat engine (1), thereby reducing the power P_{M1} of the heat engine;
- if P_{M2m}>P_{M2ref}, control an auxiliary fuel flow QCarbAux* such that it increases the fuel flow QCarb injected into the combustion chamber of the heat engine (1), thereby increasing the power P_{M1} of the heat engine;
- if P_{M2m}=P_{M2ref}, keep the flow command QCarbAux* constant.

6. The device according to claim 4, wherein a rotational speed setpoint N_{M1ref} being sent to the backup regulation system (52) of the heat engine, the instantaneous speed N_{M1m} of the heat engine is measured and it is compared with the rotational speed setpoint N_{M1ref} and wherein the device comprises means configured to:
- if N_{M1ref}<N_{M1m}, control an auxiliary fuel flow QCarbAux* such that it reduces the fuel flow QCarb injected into the combustion chamber of the heat engine (1), thereby reducing the power P_{M1} of the heat engine;
- if N_{M1ref}>N_{M1m}, control an auxiliary fuel flow QCarbAux* such that it increases the fuel flow QCarb injected into the combustion chamber of the heat engine (1), thereby increasing the power P_{M1} of the heat engine; and
- if N_{M1ref}=N_{M1m}, keep the flow command QCarbAux* constant;
and simultaneously, compare the instantaneous power P_{M2m} of the electric motor with the reference power P_{M2ref}, and
- if P_{M2m}<P_{M2ref}, reduce the heat engine rotational speed setpoint N_{M1ref};
- if P_{M2m}>P_{M2ref}, raise the heat engine rotational speed setpoint N_{M1ref}.

7. A computer program product comprising instructions which, when the program is executed by a device for regulating the rotational speed (Nₚ) according to claim 4, cause the latter to implement the steps of the method according to any one of claims 1 to 3.
